(19) Europäisches Patentamt
European Patent Office
Office européen des brevets

(11) **EP 0 341 383 B2**

(12) **NEUE EUROPÄISCHE PATENTSCHRIFT**

(45) Veröffentlichungstag und Bekanntmachung des Hinweises auf die Entscheidung über den Einspruch:
**15.01.1997 Patentblatt 1997/03**

(45) Hinweis auf die Patenterteilung:
**17.06.1992 Patentblatt 1992/25**

(21) Anmeldenummer: **89103046.2**

(22) Anmeldetag: **22.02.1989**

(51) Int. Cl.[6]: **C01B 33/193**, C09C 1/30, C09C 3/10, C09C 3/12, C09D 7/12

(54) **Feinteilige Fällungskieselsäure mit hoher Struktur, Verfahren zu seiner Herstellung und Verwendung**

Finely divided precipitated silicas with a high structure, process for their preparation and their use

Silices de précipitation finement divisées de haute structure, procédé de préparation et utilisation

(84) Benannte Vertragsstaaten:
**AT BE CH DE ES FR GB IT LI NL SE**

(30) Priorität: **07.05.1988 DE 3815670**

(43) Veröffentlichungstag der Anmeldung:
**15.11.1989 Patentblatt 1989/46**

(73) Patentinhaber: **Degussa Aktiengesellschaft 60311 Frankfurt (DE)**

(72) Erfinder:
• **Kerner, Dieter, Dr.**
  **D-6450 Hanau 1 (DE)**
• **Wagner, Adolf**
  **D-6460 Gelnhausen 2 (DE)**
• **Schmidt, Felix, Dr.**
  **D-7888 Rheinfelden (DE)**
• **Bauer, Dietrich, Dr.**
  **D-6127 Breuberg-Sandbach (DE)**

(56) Entgegenhaltungen:
**EP-A- 0 078 909        US-A- 3 709 980
US-A- 4 003 981        US-A- 4 243 428**

• **CHEMICAL ABSTRACTS, vol. 108, no. 8, 22 Februar 1988 Columbus, Ohio, USA Seite 155; rechte Spalte; ref. no. 58822J & JP-A-62252312 (Nippon Chemical Industrial Co.) 4.11.1987.**
• **CHEMICAL ABSTRACTS, vol. 101, no. 12, 17 September 1984 Columbus, Ohio, USA Seite 151; rechte Spalte; ref. no. 93689Y & JP-A-5973419 (Tokuyama Soda Co.)25.4.1984.**

**Beschreibung**

Die Erfindung betriffteine feinteilige Kieselsäure mit hoher Struktur, ein Verfahren zur Herstellung der Kieselsäure sowie die Verwendung der Kieselsäure als Mattierungsmittel in Lackfilmen.

Es ist bekannt, daß das Mattierungsvermögen einer Kieselsäure von verschiedenen Faktoren, wie zum Beispiel vom Kieselsäuretyp, der Korngröße, vom Brechungsindex und auch vom Lacksystem, abhängt. Von besonderer Bedeutung sind Kornform und Korngrößenverteilung der Sekundärteilchen sowie das insgesamt wirksame spezifische Teilchenvolumen.

An Mattierungskieselsäuren wird neben hoher Effizienz, ausgedrückt durch die Reduzierung des Glanzgrads im Vergleich zum unmattierten Lackfilm, eine Reihe weiterer Anforderungen gestellt. So soll zum Beispiel das Trocknungsverhalten der Lackfilme nicht beeinträchtigt werden, keine übermäßige Verdickung des Lacksystems erfolgen, sowie die Kratzfestigkeit der Lackfilme durch die eingebrachte Kieselsäure nicht erniedrigt werden. Einen wichtigen Punkt stellt das Schwebeverhalten der Kieselsäure dar. Die Neigung der Kieselsäure zum Absetzen und zur Bildung harter Bodenkörper, die sich nur schwer wieder aufrühren lassen, kann durch eine Reihe von Maßnahmen verhindert oder zum mindesten verbessert werden. So beschreibt z. B. DE-AS 15 92 865 die Imprägnierung von Kieselsäuren während des Herstellprozesses mittels Wachsemulsionen.

Es ist bekannt, synthetische Kieselsäuren als Mattierungsmittel einzusetzen. Vergleiche die Druckschriften
EP-PS 0 008 613
DE-PS 24 14 478
DE-AS 17 67 332
DE-OS 16 69 123
DE-AS 15 92 865

Zahlreiche Verfahren zur Herstellung synthetischer Kieselsäuren sind bekannt (vgl. Ferch in Chem.-Ing.-Techn. 48, 922 - 33 (1976). Insbesondere ist es z.B. gemäß US-A-4 243 428 bekannt, die Säurezugabe mehr- stufig und unter Einhalten von Paüsen dürchzüführen.

Gemäß DE-PS 24 14 478 können durch Strukturierung von pyrogen hergestellter Kieselsäure aerogelartige Mattierungsmittel gewonnen werden. Hierzu wird pyrogene Kieselsäure mit alkalisch eingestelltem Wasser befeuchtet, vermahlen und getrocknet. Diese Vorgehensweise zur Herstellung von Mattierungsmitteln ist aufwendig und teuer.

Das Mattierungsmittel gemäß DE-PS 24 14 478 ist ein hervorragendes Mattierungsmittel. Es weist den Nachteil auf, daß es die Lacke zu stark verdickt. Zum Verarbeiten mit der Spritzpistole muß daher zusätzlich ein Lösungsmittel hinzugesetzt werden.

Aufgabe der Erfindung ist es, bei gleichbleibender Mattierungswirkung eine möglichst große Einsparung an Lösungsmittelbedarf zu erreichen.

Gemäß DE-PS 15 92 865 wird eine wachsbeschichtete Fällungskieselsäure hergestellt und als Mattierungsmittel verwendet.

Dieses Mattierungsmittel hat den Nachteil, daß die damit hergestellten Lacke auf dunklen Oberflächen einen unerwünschten Blauschleier aufweisen.

Eine weitere Aufgabe der Erfindung ist es, ein wachsbeschichtetes Mattierungsmittel herzustellen, das keinen Blauschleier und eine bessere Mattierungswirkung aufweist.

Gegenstand der Erfindung ist eine feinteilige Fällungskieselsäure hoher Struktur mit einer

| BET-Oberfläche (DIN 66132) | zwischen 150 und 350 m$^2$ / g |
|---|---|
| Stampfdichte (DIN 53194) | zwischen 60 und 120 g / l |
| DBP-Zahl | zwischen 3,0 und 4,0 ml / g |
| Teilchengrößenverteilung (Gemessen mit Coulter Counter) | mindestens 70 % von 1 bis 6 $\mu$m, |
| die dadurch hergestellt wird, | |
| (Die Bestimmung erfolgt gemäß DE-PS 17 67 332, Spalte 2, Zeilen 30 - 64.) | |

daß man eine Mischung aus Wasser und Natriumsilikat unter Rühren auf eine Temperatur von 70 bis 80 °C erhitzt, zu dieser Vorlage konzentrierte Schwefelsäure, bis die Hälfte des vorhandenen Alkalis neutralisiert ist, zudosiert, die Reaktionsmischung mittels eines Scheraggregates behandelt und gegebenenfalls gleichzeitig die Temperatur auf 86 ± 5 °C erhöht, nach einem Zeitraum von 30 bis 120 Minuten konzentrierte Schwefelsäure mit einer höhreren Geschwindigkert hinzugibt, wobei weiterhin geschert wird, bis der pH-Wert der entstandenen Kieselsäuresuspension 3,0 bis 3,5 ist, gegebenenfalls die Kieselsäuresuspension mit Wasser verdünnt, gegebenenfalls mittels einer Kreiselpumpe und eines Hydrozyklons den Grobanteil abtrennt, die Kieselsäure mittels bekannter Filtervorrichtungen abfiltriert, den Kieselsäurefilterkuchen sulfatfrei wäscht, den Kieselsäurefilterkuchen unter Zusatz von Wasser mittels eines Rühraggregates zu einer Suspension mit einem Fesbstoffgehalt von 80 ± 10 g / l redispergiert, gegebenenfalls zu dieser Suspension Alkyldimethylbenzyl-Ammoniumchlorid hinzugibt, die so erhaltene Suspension sprühtrocknet und gegebenenfalls das getrocknete Produkt vermahlt.

Zur Bestimmung der Teilchengröße mit dem Coulter Counter werden ca. 0,5g Kieselsäure in 50 ml isotoner Kochsalzlösung (0,5% NaCl und 0,089% $Na_4P_2O_7$ • 10 $M_2O$ in destilliertem Wasser) mit einem Magnetrührer dispergiert und anschließend 1 Minute mit Ultraschall (200 Watt) behandelt. Diese Suspension wird zu 200 ml isotoner Kochsalzlösung gegeben und gerührt.

In die gerührte Suspension wird eine Meßkapillare eingetaucht, an der ein elektrisches Feld angelegt wird. Beim Passieren der Teilchen durch die Maßkapillare wird das elektrische Feld in Abhängigkeit der Teilchengröße geändert.

Ein weiterer Gegenstand der Erfindung ist ein Verfahren zur Herstellung der feinteiligen Fällungskieselsäure hoher Struktur mit einer

| BET-Oberfläche (DIN 66 132) | von 150 bis 350 $m^2$ / g |
| --- | --- |
| Stampfdichte (DIN 53 194) | swischen 60 und 120 g / l |
| DBP-Zahl | zwischen 3,0 und 4,0 ml / g |
| Teilchengrößenverteilung | mindestens 70 % von 1 bis 6 $\mu$m, |

welches dadurch gekennzeichnet ist, daß man eine Mischung aus Wasser und Natriumsilikat unter Rühren auf eine Temperatur von 70 bis 80 °C erhitzt, zu dieser Vorlage konzentrierte Schwefelsäure zudosiert, bis die Hälfte des vorhandenen Alkalis neutralisiert ist, die Reaktionsmischung mittels eines Scheraggregates behandelt und gegebenenfalls gleichzeitig die Temperatur auf 86 ± 5 °C erhöht, nach einem Zeitraum von 30 bis 120 Minuten konzentrierte Schwefelsäure mit einer höheren Geschwindigkeit, hinzugibt, bis der pH-Wert der entstandenen Kieselsäuresuspension 3,0 bis 3,5 ist, gegebenenfalls die Kieselsäuresuspension mit Wasser verdünnt, gegebenenfalls mittels einer Kreiselpumpe und eines Hydrozykldons den Grobanteil abtrennt, die Kieselsäure mittels bekannter Filtervorrichtungen abfiltriert, den Kieselsäurefilterkuchen sulfatfrei wäscht, den Kieselsäurefilterkuchen unter Zusatz von Wasser mittels eines Rühraggregates zu einer Suspension mit einem Feststoffgehalt von 80 ± 10 g/l redispergiert, gegebenenfalls zu dieser Suspension Alkyldimethylbenzyl-Ammoniumchlorid hinzugibt, die so erhaltene Suspension sprühtrocknet und gegebenenfalls das getrocknete Produkt vermahlt.

Die Erfindung geht von der Aufgabenstellung aus, Kieselsäureteilchen mit Teilchendurchmessern im Korngrößenbereich von 1 bis 6 $\mu$m herzustellen. Teilchen kleiner 1 $\mu$m sind für die Mattierung ineffektiv und verursachen in der Regel eine unerwünschte Verdickung der Lacke. Zu große Teilchen führen andererseits in den fertigen Lacken zu einer nachteiligen Rauhigkeit der Oberfläche. Die Aufgabe ist, entsprechende Teilchengrößen während der Fällung einzustellen sowie diese durch geeignete Maßnahmen bis zum Fertigproduktzu konservieren. Um sicherzustellen, daß alle Teilchen gleiche Wachstumsbedingungen vorfinden, wird das gesamte Wasserglas vorgelegt. Die Zugabe von Schwefelsäure wird in zwei Schritten vorgenommen. Im ersten Schritt wird die Säurezugabe so bemessen, daß nach Ende der ersten Stufe der Säurezugabe die Kieselsäure auszuflocken beginnt. Während dieser Wachstumsphase wird zusätzlich zum Rühren geschert, um ein übermäßiges Teilchenwachstum zu verhindern. Die Säurezugabe bleibt unterbrochen, bis das gewünschte Teilchenspektrum erreicht ist. Anschließend wird in einer zweiten Stufe der restliche Alkaligehalt des Wasserglases neutralisiert, wobei weiterhin geschert wird. Nach Erreichen eines schwach sauren pH-Werts ist die Fällung beendet.

Die Aufarbeitung der Kieselsäuresuspension geschieht in der üblichen Weise. Es besteht die Möglichkeit, daß durch lokale Übersäuerung harte und grobe Teilchen entstehen. Diese können mit Hilfe eines Hydrozyklons aus der Suspension entfernt werden. Die Filtration der Suspension erfolgt zum Beispiel mit einer Rahmenfilterpresse, in der der Filterkuchen sulfatfrei gewaschen wird. Der gewaschene Filterkuchen wird in Wasser redispergiert, gegebenenfalls ein kationisches Tensid zugesetzt und sprühgetrocknet. Das kationische Tensid bewirkt dabei schon in der wässrigen Phase eine Verdrängung des Wassers von der Teilchenoberfläche, wodurch derbeim Trocknungsprozeß auftretende Schrumpfungsprozeß weitestgehend unterbunden wird. Auf diese Weise kann verhindert werden, daß beim Trocknen die Teilchen zu größeren, festen Verbänden zusammenlagern. Je nach gewünschter Feinheit kann die erhaltene Kieselsäure so eingesetzt oder zusätzlich vermahlen werden. Durch die beschriebene Vorgehensweise genügt ein leichtes Vermahlen, d. h., es muß nur wenig Mahlenergie aufgebracht werden, um die Teilchen wieder zu desagglomerieren.

Die erfindungsgemäße Fällungskieselsäure kann als Mattierungsmittel in Lacken eingesetzt werden.

Sie hat den Vorteil, daß kein zusätzliches Lösungsmittel verwendet werden muß.

Zur Verbesserung des Absetzverhaltens der Kieselsäureprodukte in Lacken wird eine Imprägnierung mit Emulsionen entsprechend DE-PS 15 92 865 vorgenommen.

Ein weiterer Gegenstand der Erfindung ist eine mittels einer Emulsion beschichteten Fällungskieselsäure, die aus der erfindungsgemäßen Fällungskieselsäure hergestellt wird. Die Beschichtung kann nach bekanntem Verfahren gemäß DE-PS 15 92 865 erfolgen.

Die beschichtete Fällungskieselsäure weist neben denselben physikalisch-chemischen Kenndaten der unbeschichteten Fällungskieselsäure einen Kohlenstoff-Gehalt von 1 bis 8 Gew.-% auf.

In einer Ausführungsform der Erfindung kann die Fällungskieselsäure mittels einer Siliconölemulsion beschichtet sein.

Diese Fällungskieselsäure kann als Mattierungsmittel in Lacken eingesetzt werden.

In einer besonderen Ausführungsform der Erfindung kann die Fällungskieselsäure mittels einer Polyäthylenwachsemulsion beschichtet worden sein.

Diese Fällungskieselsäure kann als Mattierungsmittel in Lacken eingesetzt werden.

Von besonderem Vorteil ist, daß die mit der Wachsemulsion beschichteten Fällungskieselsäuren in den Lackoberflächen keinen Blauschleier erzeugen.

Beispiele

Die Durchführung des erfindungsgemäßen Verfahrens erfolgt in bekannten Apparaturen.

Kernstück der Fällungsapparatur ist ein hartgummiertes Doppelmantelgemäß mit einem Volumen von 120 l, das mit einem Rührwerk versehen ist. Als Rührer kommen beispielsweise Ankerrührer, Balkenrührer oder Turbinen in Frage. Das Reaktionsgefäß kann über den Doppelmantel mit Öl als Wärmeträger beheizt und thermostatisiert werden. Am Boden des Reaktionsgefäßes ist ein Ablaßrohr angebracht, das vor dem Bodenauslaßventil eine Abzweigung besitzt. Diese Abzweigung führt zu einem Scheraggregat (Dispax-Reaktor), mit welchem der Inhalt des Reaktionsgefäßes umgewälzt werden kann. Durch die an der Druckseite des Scheraggregats angebrachte Rohrleitung wird die umgewälzte Fällungssuspension wieder oben in das Reaktionsgefäß eingeleitet. Die Zugabe von Wasserglas erfolgt entweder über eine Dosierpumpe aus einem Vorratsgefäß oder direkt aus einem Faß mittels Faßpumpe. Die Schwefelsäuredosierung erfolgt aus einem Vorratsgefäß mittels Dosierpumpe.

Zur Filtration wird die Fällungssuspension mit Hilfe einer Verdrängerpumpe in eine Rahmenfilterpresse gepumpt, auf welcher der entstandene Filterkuchen mit Wasser sulfatfrei gewaschen wird.

Der gewaschene Filterkuchen wird entweder auf Bleche gegeben und in einem Trockenschrank getrocknet oder in Wasser dispergiert und sprühgetrocknet.

Die getrocknete Kieselsäure kann anschließend vermahlen werden. Das im Trockenschrank getrocknete Produkt muß in der Regel über eine Zahnscheibenmühle vorvermahlen werden, bevor die Feinvermahlung mittels Stift- oder Luftstrahlmühle erfolgt. Das sprühgetrocknete Produkt kann entweder direkt verwendet oder einer Feinvermahlung unterworfen werden.

Die Wirksamkeit der nach Beispiel 1 - 6 hergestellten, nicht beschichteten Fällungskieselsäuren wird in einem schwarzen Einbrennlack mit dem nach DE-PS 24 14 478 hergestellten Produkt verglichen. Beurteilt werden neben dem Lösungsmittelbedarf der Glanzgrad nach Lange bei einem Reflexionswinkel von 60 ° und der Grindometerwert nach Hegman.

Für die Bestimmung des Glanzgrades, der ein Maß für die Mattierkraft der geprüften Mattierungskieselsäure darstellt, wird der in Deutschland vielfach benutzte Glanzmesser nach B. Lange benutzt. Der Lange-Glanzmesser benutzt als Einfall- und Reflexionswinkel einen solchen von 45 °. Die gemessenen Glanzgrade werden in Prozenten angegeben. Je kleiner ihr Wert ausfällt, desto besser ist das Mattiervermögen der geprüften Kieselsäure oder, in anderen Worten, desto weniger Mattierungsmittel ist anzuwenden, um einen ganz bestimmten Glanzgrad zu erreichen.

Die Grindometerwertbestimmung erfolgt mit Hilfe eines Grindometers. Der Grindometerwert, der in $\mu$ gemessen wird, ist ein Maß für die gröbsten Teilchen, die sich nach dem Einrühren der Mattierungskieselsäure in der fertigen, spritzbaren Lackmischung befinden. Er läßt sich zu der Stippenbildung im trockenen Lackfilm in Beziehung setzen. Mit Hilfe des Grindometers läßt sich das gefürchtete, unerwünschte "Spritzkorn" erkennen.

Der verwendete Lack hat folgende Zusammensetzung:

| | |
|---|---|
| 7,5 Gew.-T | Lackvorpaste Tack$^®$ 1 |
| 47 Gew.-T. | fettsäuremodrfiziertes Alkydharz 60 % in Xylol (Alftalt AR 481 m) |
| 24 Gew.-T | Melaminharz Maprenal MF 800 55 % in Isobutanol |
| 6 Gew.-T. | Butanol |
| 4 Gew.-T | Ethylglykol |
| 10,5 Gew.-T | Xylol |
| 1 Gew.-T. | Silikonöl Baysilon-Lackadditiv OL 17 1 % in Xylol |

Eingearbeitet werden jeweils 2,6 Gew.-T. Produkt. Die Einarbeitung erfolgt durch 10-minutiges Rühren mit einem Flügelrührer bei 2000 U / min. Der Lack wird in ca. 30 $\mu$m starker Trockenschicht auf Bleche aufgespritzt, luftgetrocknet und 30 min bei 180 °C eingebrannt.

Die ermittelten Werte sind der Tabelle 2 zu entnehmen.

Beispiel 1

In das Fällgefäß werden 66 kg Wasser und 21 kg Natronwasserglas (d = 1,35 g/cm$^3$; Modul SiO$_2$, : Na$_2$O = 3,3) gegeben und das Gemisch unter Rühren auf 75 °C erhitzt. In diese Fällungsvorlage wird in 30 Minuten konzentrierte Schwefelsäure (d = 1,83) mit einer Geschwindigkeit von 1,45 l / h zudosiert. Nach 25 Minuten Fälldauer wird das Scheraggregat (Dispax-Reaktor) zugeschaltet. Kurz nach Ende der Säurezugabe beginnt Kieselsäure auszuflocken und die Temperatur der Fällung wird auf 85 °C erhöht. Die Säurezufuhr bleibt für 20 Minuten unterbrochen (Wartestufe). Nach 50 Minuten erfolgt die weitere Säurezugabe mit 1,81 l / h über einen Zeitraum von 15 Minuten. Danach weist die entstandene Kieselsäuresuspension einen pH-Wert von 3,4 auf. Das Scheraggregat wird ausgeschaltet.

Die Suspension wird mit 28 l Wasser verdünnt und mittels einer Kreiselpumpe mit 4,5 bar Vordruck auf einen Hydrozyklon gegeben. Das Verhältnis Grobgut- zu Feingutsuspension beträgt 1 : 12.

Die Feingutsuspension wird über eine Rahmenfilterpresse gegeben und sulfatfrei gewaschen.

Der gewaschene Filterkuchen wird mit einem Ultra-Turrax unter Zusatz von Wasser so redispergiert, daß eine Suspension von 80 g/l entsteht. Zur Suspension wird ein Alkyldimethylbenzyl-Ammoniumchlorid gegeben (BARQUAT$^®$) so daß 0,8 g / l Wirkstoff in der Suspension vorhanden sind.

Diese Suspension läuft durch ein Sieb mit einer Maschenweite von 120 μm, wodurch grobe Fremdpartikel zurückgehalten werden. Unmittelbar danach wird die Suspension sprühgetrocknet. Die Zerstäubung erfolgt mittels einer Zweistoffdüse.

Das getrocknete Produkt hat folgende physikalisch-chemische Eigenschaften:

| pH-Wert (DIN 53200) | | 6,0 |
| --- | --- | --- |
| Wassergehalt (DIN | | 4,8 % |
| spezifische Oberfläche (DIN 66132) | | 272 m$^2$/g |
| DBP-Aufnahme (ml / g) | | 3,7 |
| Stampfdichte (DIN 53194) | | 87 g / l |
| Korngrößenverteilung (Coulter-Counter) | < 1 μm | 5 % |
| | 1 - 6 μm | 84 % |
| | > 6 μm | 11 % |

Beispiel 2-5

Es werden Fällungskieselsäuren hergestellt, wie unter Beispiel 1 beschrieben, mit dem einzigen Unterschied, daß die Dauer der Unterbrechung der Säurezugabe (= Wartestufe) variiert wird.

Die physikalisch-chemischen Daten der erhaltenen Produkte sind in Tabelle 1 aufgeführt

Beispiel 6

Es wird eine Fällungskieselsäure hergestellt, wie unter Beispiel 1 beschrieben. Im Unterschied zu Beispiel 1 wird auf das Aufheizen auf 85 °C während der zweiten Phase der Säurezugabe verzichtet. Die Wartestufe beträgt 30 Minuten.

Die physikalisch-chemischen Daten der erhaltenen Fällungskieselsäure sind in Tabelle 1 aufgeführt.

Beispiel 7 (Beschichtung mit Siliconöl-Emulsion)

Es wird eine Fällungskieselsäure, wie in Beispiel 1 beschrieben, hergestellt. Im Unterschied zu Beispiel 1 beträgt die Wartestufe 60 Minuten. Nach Fällungsende werden in die Fällungskieselsäuresuspension 3,4 kg einer Emulsion von Silikonöl zugegeben.

Die Emulsion wird wie folgt hergestellt:
0,24 Gew.-Teile Emulan AF werden in 80 Gew.-Teilen Wasser gelöst. Unter Dispergieren mit einem Ultra-Turrax werden 20 Gew.-Teile Baysilon-Öl$^®$ AC 3031 zugegeben.

EP 0 341 383 B2

Die Aufarbeitung der Fällungskieselsäuresuspension erfolgt wie in Beispiel 1 beschrieben. Die sprühgetrocknete Fällungskieselsäure wird anschließend in einer Luftstrahlmühle vermahlen.

Die physikalisch-chemischen Daten sind in Tabelle 3 aufgeführt.

Beispiel 8 (Beschichtung mit Polyethylenwachsemulsion)

Es wird die Fällungskieselsäure, wie in Beispiel 1 beschrieben, hergestellt. Die Wartestufe beträgt 90 Minuten. Von der erhaltenen Feingutsuspension werden 45 l mit 625 g einer Wachsemulsion unter Rühren versetzt. Die Herstellung der Wachsemulsion erfolgt in einem mit Dampf beheizbaren und mit einem Dispergator ausgerüsteten Autoklaven. In diesem werden zunächst bei 100 °C 4,8 Gew.-Teile eines Alkylpolyglycolethers (Marlowet$^{®}$ GFW) in 81,0 Gew.-Teilen Wasser bei ca. 100 °C gelöst. Anschließend werden 14,2 Gew.-Teile Niederdruck-Polyethylenwachs zugegeben und auf 130 °C erhitzt. Bei Erreichen von 130 °C wird der Dispergator eingeschaltet und 30 Minuten dispergiert. Während dieser Zeit wird die Temperatur zwischen 130 °C und 140 °C gehalten. Nach Abstellen des Dispergators und Abkühlen auf rund 110 °C wird die fertige Emulsion abgelassen.

Das verwendete Polyethylenwachs wird durch folgende Kennzahlen charakterisiert:

| mittleres Molekulargewicht | 1000 |
| Erstarrungspunkt | 100 - 104 °C |
| Tropfpunkt | 110 - 117 °C |
| Dichte (g / cm$^3$) | 0,93 |

Die Aufarbeitung der Fällungskieselsäuresuspension erfolgt wie in Beispiel 1 beschrieben. Die sprühgetrocknete Fällungskieselsäure wird anschließend in einer Luftstrahlmühle vermahlen.
Die physikalisch-chemischen Daten sind in Tabelle 3 aufgeführt.

Beispiel 9 (Beschichtung mit Polyethylenwachs-Emulsion)

Es wird die Fällungskieselsäure, wie in Beispiel 1 beschrieben, hergestellt. Die Wartestufe beträgt 90 Minuten. Von der erhaltenen Feingutsuspension werden 45 l mit 860 g einer Wachsemulsion unter Rühren versetzt. Die Herstellung der Wachsemulsion erfolgt in einem mit Dampf beheizbaren und mit einem Dispergator ausgerüsteten Autoklaven. In diesem werden zunächst bei 100 °C 4,8 Gew.-Teile eines Alkylpolyglycolethers (Marlowet$^{®}$ GFW) in 81,0 Gew.-Teilen Wasser bei ca. 100 °C gelöst.
Anschließend werden 14,2 Gew.-Teile Niederdruck-Polyethylenwachs zugegeben und auf 130 °C erhitzt. Bei Erreichen von 130 °C wird der Dispergator eingeschaltet und 30 Minuten dispergiert. Während dieser Zeit wird die Temperatur zwischen 130 °C und 140 °C gehalten. Nach Abstellen des Dispergators und Abkühlen auf rund 110 °C wird die fertige Emulsion abgelassen.

Das verwendete Polyethylenwachse wird durch folgende Kennzahlen charakterisiert:

| mittleres Molekulargewicht | 2700 |
| Erstarrungspunkt | 92 - 96 °C |
| Tropfpunkt | 102 - 110 °C |
| Dichte (g / cm$^3$) | 0,92 |

Die Aufarbeitung der Fällungskieselsäuresuspension erfolgt wie in Beispiel 1 beschrieben. Die sprühgetrocknete Fällungskieselsäure wird anschließend in einer Luftstrahlmühle vermahlen.
Die physikalisch-chemischen Daten sind in der Tabelle 3 aufgeführt.

Beispiel 10

Es werden die anwendungstechnischen Eigenschaften der nach Beispiel 7,8 und 9 gewonnenen Fällungskieselsäuren in drei Testlackrezepturen einem nach DE-PS 15 92 865 hergestellten Mattierungsmittel gegenübergestellt. Die Daten sind in Tabelle 4 zusammengefaßt.

Die Bestimmung des Glanzgrades erfolgt mit Glanzmeßgeräten nach Lange bzw. Gardner (ASTM D 523 - 53 T). Nach Lange betragen Einfalls- und Reflexionswinkel 45 °, nach Gardner 60 ° und 85 °. Der Grindometerwert wird nach ISO 1524 im schwarzen Einbrennlack bestimmt.

Die Testlackrezepturen und die Vorgehensweise werden nachfolgend beschrieben.

A) Schwarzer Einbrennlack

| | Gew.-Teile |
|---|---|
| Lackvorpaste TACK® 1 | 7,5 |
| Alkydal® R 40 / 60 %ig im Xylol | 47,0 |
| Maprenal® MF 800 / 55 %ig in Isobutanol | 24,0 |
| Butanol | 5,0 |
| Ethylglycol | 3,0 |
| Xylol | 8,5 |
| Butylglykol | 3,0 |
| Baysilon®-Öl OL 17 1 %ig in Xylol | 2,0 |

Es werden 5 g Fällungskieselsäure bzw. Mattierungsmittel auf 100 g Lack mit einem Flügelrührer bei 2000 Upm 8 Minuten lang eingerührt. Die Viskosität der Mischung wird mit Xylol auf eine Auslaufzeit von 20 Sekunden eingestellt (Fordbecher, DIN-4 mm-Düse).

Der Lack wird in ca. 30 µm starker Trockenschicht auf Bleche aufgespritzt, luftgetrocknet und 30 min. bei 180 °C eingebrannt.

B) Polyesterlack (UP-Lack)

| | Gew.-Teile |
|---|---|
| Roskydal® 500 A | 36,0 |
| Roskydal® tix 18 | 4,0 |
| Tert.-Butylkatechol 1 %ig in Monostyrol | 0,5 |
| Aerosil® 200 | 0,3 |
| Baryt, gemahlen | 20,0 |
| Bayertitan R-FD-1 | 10,5 |
| Pigmentgrün 6001 | 1,5 |
| Baysilon®-Öl OL 17 1 %ig in Toluol | 2,0 |
| Ethylacetat | 6,0 |
| Monostyrol | 18,4 |
| Octa-Soligen-Kobalt in Toluol (2,2 % Co) | 0,8 |

In 100 g dieser Lackmischung werden 6,5 g Fällungskieselsäure bzw. Mattierungsmittel vor Verarbeitung eingebracht und 8 Minuten bei 2000 Upm mit einem Flügelrührer dispergiert. Die Viskosität der Mischung wird mit Ethylacetat auf eine Auslaufzeit von 20 Sekunden (Fordbecher, DIN-4mm-Düse) eingestellt. Die Lackmischung wird in Schichtstärken von ca. 80 $\mu$m aufgetragen.

C) DD-Lack

|  | Gew.-Teile |
|---|---|
| Desmophen® 800 | 10,0 |
| Desmophen® 1700 | 20,0 |
| NC-Chips E 730 | 4,0 |
| Butylacetat 98 %ig | 18,0 |
| Ethylglycolacetat | 22,8 |
| Butoxyl | 5,0 |
| Shellsol® A | 20,0 |
| Baysilon-Öl OL 17 10 %ig in Xylol | 0,2 |

Es werden 10,8 g Mattierungsmittel und 36 g Desmodur® L / 75 %ig in Ethylacetat zu 100 g obiger Mischung gegeben und 8 Minuten bei 2000 Upm mit einem Flügelrührer dispergiert. Die Mischung wird mit Ethylacetat auf eine Auslaufzeit von 18 Sekunden (DIN-Becher, 4-mm-Düse gemäß DIN 53211) eingestellt. Der Auftrag erfolgt in Schichtstärken von 30 - 40 $\mu$m.

Wie aus Tabelle 4 ersichtlich, ist in allen Testlackrezepturen gegenüber dem Stand der Technik eine deutliche Verbesserung der Mattierungswirkung festzustellen.

Tabelle 1

| | Dauer der Wartestufe (min) | pH-Wert DIN 53200 | Wassergehalt DIN 55921 (%) | spezifische Oberfläche DIN 66132 ($m^2$ / g) | DBP-Aufnahme (ml / g) | Stampfdichte DIN 53194 (g / l) | Korngrößenverteilung (Coulter-Counter) | | |
|---|---|---|---|---|---|---|---|---|---|
| | | | | | | | < 1 µm | 1–6 µm | >6 µm |
| Beispiel 1 | 20 | 6,0 | 4,8 | 272 | 3,7 | 87 | 5 | 84 | 11 |
| Beispiel 2 | 30 | 6,0 | 5,3 | 300 | 3,8 | 80 | 7 | 85 | 8 |
| Beispiel 3 | 45 | 5,2 | 5,7 | 239 | 3,7 | 82 | 10 | 85 | 5 |
| Beispiel 4 | 60 | 5,8 | 6,4 | 244 | 3,4 | 86 | 15 | 84 | 1 |
| Beispiel 5 | 90 | 5,9 | 3,9 | 278 | 3,8 | 76 | 15 | 83 | 2 |
| Beispiel 6 | 30 | 6,4 | 7,7 | 316 | 3,8 | 103 | 3 | 84 | 13 |

EP 0 341 383 B2

Tabelle 2

| Produkt | Viskosität DIN 4 mm sec. | Gew.-T. Lösungs- mittel auf Verarbeitung- skonsitenz | Grindome- terwert in μm | % Glanz 60 ° Lange |
|---|---|---|---|---|
| aus Beispiel 1 | 33 | 1,5 | 50 | 38,5 |
| aus Beispiel 2 | 33 | 1,5 | 37 | 40,5 |
| aus Beispiel 3 | 32 | - | 28 | 42,5 |
| aus Beispiel 4 | 38 | 4,5 | 30 | 38,5 |
| aus Beispiel 5 | 31 | - | 28 | 47,0 |
| aus Beispiel 6 | 33 | - | 47 | 38,0 |
| Vergleichprodukt gemäß DS-PS 24 14 478 | 39 | 5,5 | 40 | 38,5 |

Tabelle 3

| | pH-Wert DIN 53200 | Wassergehalt DIN 55921 (%) | spezifische Oberfläche DIN 66132 $(m^2 / g)$ | DBP-Aufnahme (ml/g) | Stampfdichte DIN 53194 (g / l) | Kohlenstoffgehalt (%) |
|---|---|---|---|---|---|---|
| aus Beispiel 7 | 6,2 | 4,7 | 205 | 3,7 | 64 | 1,7 |
| aus Beispiel 8 | 6,7 | 4,9 | 213 | 3,5 | 83 | 3,5 |
| aus Beispiel 9 | 6,7 | 4,9 | 203 | 3,6 | 79 | 4,0 |

Tabelle 4

| Produkt | Schwarzer Einbrennlack | | UP-Lack | | | DD-Lack | | |
|---|---|---|---|---|---|---|---|---|
| | Grindometer-wert in µm | Glanz 45° Lange | Glanz 45° Lange | Glanz 60° Gardner | Glanz 85° Gardner | Glanz 45° Lange | Glanz 60° Gardner | Glanz 85° Gardner |
| aus Beispiel 7 | 28 | 2,5 | 17 | 26 | 49 | 5,5 | 9 | 18 |
| aus Beispiel 8a | 30 | 2,5 | 8 | 13 | 22 | 6,5 | 10 | 17 |
| aus Beispiel 8b | 30 | 2,5 | 13,5 | 21 | 40 | 4,5 | 9 | 13 |
| Mattierungsmittel nach DE-PS 15 92 865 | 26 | 4,5 | 44,5 | 59 | 86 | 22,5 | 36 | 68 |

Die in den Beispielen verwendeten Handelsbezeichnungen gaben die folgenden Bedeutungen:

Lackvorpaste Tack® 1

| Produkt | Zusammensetzung (Gew.-%) |
|---|---|
| Rußpaste Tack 1 | 18 Pigmentruß der Klasse HCC |
| | 36 Alkydharz auf Sojaölbasis |
| | 46 Lösemittel |

Alftalat AR 481 m

Charakteristik: Kurz- bzw. mittelölige, trocknende Alkydharze. Ölart: Ricinenöl
Einsatzgebiete: Einbrennlacke und - grundierungen für Metalloberflächen. Säurehärtende Lacke. Nitrocellulose-Kombinationslacke.

| | | Alftalat AR 481 m |
|---|---|---|
| Zusammensetzung des 100 %igen Harzes (ca.) | | |
| Ölgehalt (Triglycerid) | | 48 % |
| Phthalsäureanhydrid | | 39 % |
| Viskosität | | |
| Auslaufzeit 4, DIN 53211/29°C | s | 50 - 70[2]) |
| 23 °C | s | 40 - 60[2]) |
| Dynamische Viskosität | | |
| DIN 53177/20°C | mPa . s | 215 - 300[2]) |
| 23°C | mPa . s | 175 - 250[2]) |
| Farbzahl | | |
| Jodfarbzahl DIN 6162 | mg J/100 cm$^3$ | < 15[2]) |
| Gardner Color Standard ASTM D 1544 | | < 7[2]) |

| | | Alftalat AR 481 m |
|---|---|---|
| Säurezahl DIN 53402 | mg KOH/g Festh. | < 25 |
| Dichte (Lieferform) 20 °C | g/cm$^3$ | ca. 1,02 |
| Gehalt an nichtflüchtigen Anteilen | | |
| DIN 53216 (2g + 2cm$^3$ Toluol/1 h 125 °C) | % | ca. 60 |
| Flammpunkt (Lieferform) DIN 53213 | °C | ca. 27 |

Maprenal MF 800

Charakteristik: Nichtplastifierte, isobutylveretherte Melaminformaldehydharze.

| | | Maprenal MF 800 |
|---|---|---|
| Viskosität (Lieferform) | | |
| Auslaufzeit 4 DIN 53211/20°C | s | 60 - 90 |
| 23°C | s | 50 - 80 |
| Dyamische Viskosität | | |
| DIN 53177/20°C | mPa · s | 250 - 430 |
| 23°C | mPa · s | 220 - 360 |
| Farbzahl (Lieferform) | | |
| Jodfarbzahl DIN 6162 | mg J/100 cm$^3$ | < 1 |
| Gardner Color Standard ASTM D 1544 | | < 1 |
| Säurezahl DIN 53402 | mg KOH/g Festh. | < 1 |
| Dichte 20 °C | g/cm$^3$ | ca. 0,99 |
| Benzinverträglichkeit (n-Heptan) DIN 53 187 | cm$^3$/1 g Melaminharz (Lieferform) | 5 - 10 |
| Gehalt an nichtflüchtigen Anteilen (Lieferform) | | |
| DIN 53216 (2g + 2 cm$^3$ Butanol/1 h 120 °C) | % | ca. 55 |
| Flammpunkt (lieferform) DIN 53 213 | °C | ca. 31 |

Baysilone-Lackadditiv OL 17

Polyethermodifiziertes Methylpolysiloxan

| Liefertoleranzen: | Aussehen | klar, gelblich |
|---|---|---|
| | Jodfarbzahl, DIN 6162 | max. 3 |
| | Viskosität, DIN 53015, 23 °C | 650-850 mPa·s |
| Weitere Kenndaten: | Dichte, DIN 53217, 20 °C | 1,025-1,050 $\frac{g}{ml}$ |
| | Flammpunkt, DIN 51758 | ca. 80 °C |
| | Oberflächenspannung, DIN 53914, 23°C mit Harkins-Jordan-Korrektur | ca. 21 mN/m |
| | Brechungszahl, 23 °C | 1,447-1,451 |
| Löslichkeit: | Benzinkohlenwasserstoffe | u/l |
| | Benzolkohlenwasserstoffe | l |
| | Alkohole | l |
| | Ester | l |
| | Ketone | l |
| | Glykolether | l |
| | Glykoletheracetate | l |
| | Erklärungen: | l = löslich |
| | | u = unlöslich |

Baysilon-Öl® AC 3031

Chemische Charakterisierung Polysiloxandiol
Physikalische Daten

| Schmelztemperatur Erweichungstemperatur | < - 60 °C (Stockpunkt) |
|---|---|
| Siedetemperatur | ab ca. 130 °C |
| Zersetzungstemperatur | °C |
| pH-Wert | ca. 7 - 8 (bei 20 g / l Wasser) |
| Löslichkeit in Wasser | bei 20 °C unlöslich |
| Eigengeruch | deutlicher Eigengeruch |
| Zustand (20 °C) | flüssig |
| Dampfdruck (20 °C) | < 100 mbar |
| Dichte (20 °C) | 0,98 g / ml |

Emulan AF

| Chemischer Charakter | Mittelhochethoxylierter Fettalkohol, nichtionisch. |
|---|---|
| Löslichkeit (bei 25 °C, 10%ig) | In Mineralölen, fetten Ölen, geschmolzenen Paraffinen und Fetten gut und meistens auch klar löslich. In den meisten organischen Lösungsmitteln klar löslich. |
| Chemischer Charakter | Fettalkoholethoxylat |
| Konsistenz (Raumtemperatur) | weichwachsartig |
| Säurezahl (DIN 53402) | prakt. 0 |
| Verseifungszahl (DIN 53 401) | prakt. 0 |
| pH-Wert (1%ige wäßrige Lösung oder Dispersion) | 6 - 7,5 |
| Gehalt an Wirksubstanz | prakt. 100 % |
| Dichte (g/cm$^3$) (20 °C) (DIN 51757) | ca. 0,91 (50, °C) |
| Viskosität (mPa.s) (20 °C) (DIN 53015) | - |
| Schmelupunkt | ca. 42 °C |
| Erstarrungspunkt | - |
| Tropfpunkt (DGF M-III-3) | - |
| Flammpunkt (DIN 51758) | ca. 190 °C |
| HLB-Wert (W.C. Griffin) | ca. 11 |
| Hauptwirktendenz (Emulsionstyp) | Öl in Wasser |
| Löslichkeitstendenz | in Mineralöl und polaren organischen Medien |

Alkydal R 40

| Kurzöliges Alkydharz auf Basis Rizinenöl. | |
|---|---|
| Ölgehalt/Triglyzerid | ca. 40 % |
| Phthalsäureanhydrid | ca. 38 % |
| Dichte/20°C | ca. 1,13 g/cm$^3$ |
| OH-Gehalt | 2,5 % |

| Liefertoleranz | |
|---|---|
| Jodfarbzahl/50 %ige Lösung | max. 5 |
| Säurezahl/lösungsmittelfrei | 20 - 30 |
| Viskosität/20 °C Lieferform | 3500-4500 mPa.s (cP) |
| Flammpunkt | ca. 27 °C |

<u>Roskydal 500 A</u>

Ungesättigtes Polyesterharz (Glanzpolyester), reaktiv, hart aushärtend.

| Liefertoleranz* | | |
|---|---|---|
| nichtflüchtiger Anteil | | 74 - 77 % |
| Hazenfarbzahl | | max. 100 |
| Säurezahl/Lieferform | | 10 - 20 |
| Viskosität/20 °C | | 2200...2600 mPa.s |
| Sonstige Daten: | Dichte/20 °C | ca. 1,12 g/cm$^3$ |
| | Flammpunkt | ca. 37 °C |

\* = Prüfmethoden nach DIN 58184

<u>Roskydal tix 18</u>

Thixotropes ungesättigtes Polyesterharz (Paraffin-Typ), reaktiv.

| Liefertoleranz* | |
|---|---|
| nichtflüchtiger Anteil | 49...53 % |
| Jodfarbzahl | max. 2 |
| Säurezahl/Lieferform | max. 15 |
| Viskosität 20 °C | thixotropes Fließverhalten |
| Dichte/20 °C | ca. 1,07 g/cm$^3$ |
| Flammpunkt | ca. 32 °C |

\* = Prüfmethoden nach DIN 53184

| Bayertitan R-FD-1 | | | | | | | |
|---|---|---|---|---|---|---|---|
| Bayertitan | % TiO$_2$ | Zusätzliche Bestandteile | Ölzahl nach DIN 53 199 | Aufhellvermögen | | Rel. Streuverm. nach DIN 53 165 | Dichte nach DIN 53193 |
| | | | | nach Reynolds | nach DIN 53 192 | | |
| F-FD-1 | 96 | Al$_2$O$_3$ | 19 | 1900 | 750 | 112 | 4,1 |

Pigmentgrün 6001

|  |  | Pigmentgrün 6001 |
|---|---|---|
| Color Index Nr. |  | 77 335 |
| Color Index Pigment |  | 19 |
| Chemische Zusammensetzung |  | Co-Al-Ti-Ni Zn-Oxid |
| Ölzahl 1) | g/100 g | 20 |
| Trocknungsverlust 2) | % | max. 0.5 |
| Stampfdichte 3) | g/l | 1600 |
| Siebrückstand 4) | % | max. 0,1 |
| Farbstärke 7) |  | - |
| Deckfähigskeitszahl 8) | % | 190 |
| Teilchegröße (TEM) | $\mu$m | 0,15-2,0 |
| Dichte 9) | g/cm$^3$ | 5,0 |
| Wasserlsliche Anteil 10) | % | max. 0,5 |
| Spez. Oberfläche 11) | m$^2$/g | - |
| pH-Wert 12) |  | 8,5-9,5 |
| Hitzebeständigkeit | °C | > 500 |
| Lichtechtheit/Vollton 13) |  | 8 |
| TiO$_2$-Ausmischung 1 : 1 |  | 8 |
| TiO$_2$-Ausmischung 1 : 10 |  | 8 |
| Wetterechtheit/Vollton |  | sehr gut |
| Säurebeständigkeit |  | sehr gut |
| Alkalibeständigkeit |  | gut |
| Kalkechtheit |  | gut |
| Lösemittelechtheit |  | sehr gut |
| Migrationsechtheit |  | sehr gut |

Erklärung der Fußnoten:
1) nach DIN ISO 787/V, ASTM D 281 oder JIS K 5101/9
2) nach DIN ISO 787/II, ASTM D 280 oder JIS K 5101/21. bei VOSSEN-Blau erfolgt Rückwaage unmittelbar nach Herausnahme der Probe aus dem Trockenschrank im heißen Zustand.
3) nach DIN ISO 787/XI oder JIS K 5101/18
4) Cd-, Co- und Ti-Pigmente nach DIN 53 195 (0,045 $\mu$m Sieb) VOSSEN-Blau nach DIN ISO 787/XVIII, (0.040 $\mu$ Sieb), ASTM D 1514 oder JIS K 5101 20
5) nach ISO 787/I
6) nach ISO 787/XVI
7) nach DIN 53 204 und DIN 53 234
8) in PVC weich, TiO$_2$ RN 56 = 100 %
9) nach DIN ISO 787/X oder JIS K 5101/17
10) nach DIN ISO 787/III oder JIS K 51010/22
11) nach DIN 66 131
12) nach DIN ISO 787/IX, ASTM D 1208 oder JIS K 5101/24
13) nach DIN 54 003 oder JIS K 5101/15

Octa-Solingen-Kobalt

Octa-Solingen-Kobalt ist ein Trockenstoff, der neben 2-n Äthylhexansäure ($C_8H_{16}O_2$) 16% Co enthält.

Desmophen 800

Stark verzweigter, hydroxylgruppenhaltiger Polyester.

| Kennzahlen | | |
|---|---|---|
| Liederform | 100 % | ca. 85 % |
| Hydroxylgehalt: | ca. 8,8 % | ca. 7,5 % |
| Säurezahl: | < 4 | < 4 |
| Farbzahl nach DIN 6162: | 7 - 10 * | 3 - 8 * |
| Flammpunkt nach DIN 51 758: | > 200 °C | - |
| DIN-EN 53 | - | ca. 49 °C |
| Dichte bei 20 °C nach DIN 51 757: | 1,14 g/cm$^3$ | ca. 1,11 g/cm$^3$ |
| Viskosität (Geschwindigkeitsgefälle D≈150 s$^{-1}$) bei 20 °C: | 900 ± 100 | 900 ± 100 |
| | mPas ** | mPas ** |
| | 725 ± 75 | 725 ± 75 |
| | mPas ** | mPas ** |
| Wassergehalt: | < 0,15 % | < 0,15 % |

* 50 % in Ethylglykolacetat
** 70 % in Ethylglykolacetat

Aerosil[R] 200

Aerosil[R] 200 ist eine pyrogen hergestellite Kieselsäure mit den folgenden physikalisch-chemischen Kenndaten;

| Oberfläche nach BET | $m^2/g$ | $200 \pm 25$ |
|---|---|---|
| Mittlere Größe der Primärteilchen | Nanometer | 12 |
| Stampfdichte 1) | g/l | ca. 50 |
| Trocknungsverlust 2) (2 h bei 105°C) bei Verlassen des Werkes | % | < 1,5 |
| Glühverlust 2)6) (2 h bei 1000°C) | % | < 1 |
| pH-Wert 3) (in 4 %iger wäßriger Dispersion) | | 3,6 - 4,3 |
| $SiO_2$ 5) | % | > 99,8 |
| $Al_2O_3$ 5) | % | < 0,05 |
| $Fe_2O_3$ 5) | % | < 0,003 |
| $TiO_2$ 5) | % | < 0,03 |
| HCl 5)7) | % | < 0,025 |
| Siebrückstand 4) nach Mocker (45µm) | % | < 0,05 |

Technische Daten der AEROSIL-Standardtypen
1) nach DIN 53 194
2) nach DIN 55 921
3) nach DIN 53 200
4) nach DIN 53 580
5) bezogen aud die 2 Stunden bei 1000°C geglühte Substanz
6) bezogen aud die 2 Stunden bei 105°C getrocknete Substanz
7) HCl-Gehalt ist Bestandteil des Glühverlustes

Desmophen 1700

Linearer, hydroxylgruppenhaltiger Polyester.

| Kennzahlen | |
|---|---|
| Hydroxylgehalt: | ca. 1,2 % |
| Äquivalentgewicht: | ca. 1418 |
| Farbzahl nach DIN 6162*: | max. 5 |
| Flammpunkt nach DIN 51758: | > 200 °C |
| Dichte bei 20 °C nach DIN 53217: | ca. 1,19 $g/cm^3$ |
| Viskosität bei 23 °C**: (Geschwindigkeitsgefälle D$\approx$190 $s^{-1}$) | $575 \pm 75$ mPa · s |
| Wassergehalt: | < 0,15 % |

\* 50 %ig in Ethylglykolacetat
\*\* 70 %ig in Ethylglykolacetat

NC-Chips E 730

NC-Chips E 730 ist eine Collodiumwolle

Shellsol® A

Shellsol® A ist ein aromatenreiches Kohlenstoff-Lösungsmittel mit den folgenden Daten:

| | |
|---|---|
| Siedegrenzen °C ASTM d 107/86 | 160 - 182 |
| Dichte bei 12 °C ASTM D-1298 | 0,874 |
| Flammpunkt °C AP IP 170 PM ASTM D-93 | 47 |
| Verdunstungszahl (Äther=1) DIN 53 170 | 46 |
| Brechungsindex $n_D^{20}$ DIN 53 169 | 1.499 |
| Farbe (Saybolt) ASTM D-156 | + 30 |
| Viskosität 25 °C mm$^2$/s ASTM D-445 | 0.810 |
| Anilinpunkt °C=mixes ASTM D 611 | 15 |
| Kauri-Butanol-Wert ASTM D-1133 | 90 |
| Aromatengehalt Vol.-% ASTM D-1319 | 98 |
| Oberflächenspannung b. 20 °C mN/m ASTM D-971 | 29.5 |

Desmodur L

Aromatisches Polyisocyanat.

| Kennzahlen | | |
|---|---|---|
| | 75 %ige Lieferform | 67 %ige Lieferform |
| NCO-Gehalt*: | ca. 13 % | ca. 11,6 % |
| Äquivalentgewicht: | ca. 323 | ca. 362 |
| Farbzahl nach DIN 6162*: | max. 5 | max. 5 |
| Flammpunkt nach DIN 53 213: | ca. +1°C | ca. -38°C |
| Dichte bei 20 °C nach DIN 53217: | ca. 1,17 g/cm$^3$ | ca. 1,15 g/cm$^3$ |
| Viskosität bei 23 °C (mPa·s)* | 1500±400 | 1500 ± 400 |
| Gehalt an monomerem Diisocyanat | < 0,5 % | < 0,5 % |

* Lieferspezifikation

**Patentansprüche**

1. Verfahren zur Herstellung einer feinteiligen Fällungskieselsäure hoher Struktur mit einer

| BET-Oberfläche (DIN 66 132) | von 150 bis 350 m$^2$/g |
|---|---|
| Stampfdichte (DIN 53194) | swischen 60 und 120 g/l |
| DBP-Zahl | zwischen 3,0 und 4,0 ml/g |
| Teilchengrößenverteilung | mindestens 70 % von 1 bis 6 mm |

wobei man eine Mischung aus Wasser und Natriumsilikat unter Rühren auf eine Temperatur von 70 bis 80 °C erhitzt, zu dieser Vorlage konzentrierte Schwefelsäure, bis die Hälfte des vorhandenen Alkalis neutralisiert ist, zudosiert, die Reaktionsmischung mittels eines Scheraggregates behandelt und gegebenenfalls gleichzeitig die Temperatur auf 86 ± 5 °C erhöht, nach einem Zeitraum von 30 bis 120 Minuten konzentrierte Schwefelsäure mit einer höhreren Geschwindigkeit hinzugibt, wobei weiterhin geschert wird, bis der pH-Wert der entstandenen Kieselsäuresuspension 3,0 bis 3,5 ist, gegebenenfalls die Kieselsäuresuspension mit Wasser verdünnt, gegebenenfalls mittels einer Kreiselpumpe und eines Hydrozyklons den Grobanteil abtrennt, die Kieselsäure mittels bekannter Filtervorrichtungen abfiltriert, den Kieselsäurefilterkuchen sulfatfrei wäscht, den Kieselsäurefilterkuchen unter Zusatz von Wasser mittels eines Rühraggregates zu einer Suspension mit einem Feststoffgehalt von 80 ± 10 g / l redispergiert, gegebenenfalls zu dieser Suspension Alkyldimethylbenzyl-Ammoniumchlorid hinzugibt, die so erhaltene Suspension sprühtrocknet und gegebenenfalls das getrocknete Produkt vermahlt.

2. Feinteilige Fällungskieselsäure mit hoher Struktur mit einer

| BET-Oberfläche (DIN 66132) | von 150 bis 350 m$^2$/g |
|---|---|
| Stampfdichte (DIN 53194) | swischen 60 und 120 g/l |
| DBP-Zahl | zwischen 3,0 und 4.0 ml/g |
| Teilchengrößenverteilung | mindestens 70% von 1 bis 6 $\mu$m , hergestellt nach Anspruch 1 |

3. Verwendung der feinteiligen Fällungskieselsäure gemäß Anspruch 2 als Mattierungsmittel in Lacken.

4. Fällungskieselsäure nach Anspruch 2, dadurch gekennzeichnet daß sie mittels einer Emulsion beschichtet wurde und einen Kohlenstoffgehalt von 1 bis 8 Gew.-% aufweist.

5. Fällungskieselsäure nach Anspruch 4, dadurch gekennzeichnet, daß sie mittels einer Siliconölemulsion beschichtet wurde.

6. Fällungskieselsäure nach Anspruch 4, dadurch gekennzeichnet, daß sie mittels einer Polyäthylen-Wachsemulsion beschichtet wurde.

7. Verwendung der Fällungskieselsäure nach Anspruch 5 als Mattierungsmittel in Lacken.

8. Verwendung der Fällungskieselsäure nach Anspruch 6 als Mattierungsmittel in Lacken.

**Claims**

1. A process for the production of a highly structured, finely-divided precipitated silica having a

| BET surface area (DIN 66132) | of 150 to 350 m$^2$/g |
|---|---|
| compacted bulk density (DIN 53194) | of 60 to 120 g/l |
| DBP value | of 3.0 to 4.0 mg/l |
| particle size distribution | at least 70% from 1 to 6 $\mu$m |

wherein a mixture of water and sodium silicate is heated, with stirring, to a temperature of 70 to 80°C, concentrated sulphuric acid is added thereto until half of the alkali present has been neutralised, the reaction mixture is treated by means of a shearing unit and the temperature is optionally increased at the same time to $86 \pm 5$°C, after a period of 30 to 120 minutes concentrated sulphuric acid is added at a higher rate, with continued shearing, until the pH value of the silica suspension formed is from 3.0 to 3.5, the silica suspension is optionally diluted with water, the coarse fraction is optionally separated off by means of a centrifugal pump and a hydrocyclone, the silica is filtered off by means of known filtering devices, the silica filter cake is washed until free from sulphate, the silica filter cake is redispersed by means of a stirrer and with addition of water to form a suspension having a solids content of $80 \pm 10$ g/l, alkyldimethylbenzyl ammonium chloride is optionally added to the resulting suspension, the suspension thus obtained is spray-dried and the dried product is optionally ground.

2. A highly structured, finely-divided precipitated silica having a

| | |
|---|---|
| BET surface area (DIN 66132) | of 150 to 350 m$^2$/g |
| compacted bulk density (DIN 53194) | of 60 to 120 g/l |
| DBP value | of 3.0 to 4.0 mg/l |
| particle size distribution | at least 70% from 1 to 6 $\mu$m |

prepared according to claim 1.

3. The use of the finely-divided precipitated silica according to claim 2 as a flatting agent in paints.

4. The precipitated silica according to claim 2, characterised in that it has been coated with an emulsion and has a carbon content of from 1 to 8 wt.%.

5. The precipitated silica according to claim 4, characterised in that it has been coated with a silicone emulsion.

6. The precipitated silica according to claim 4, characterised in that it has been coated with a polyethylene wax emulsion.

7. The use of the precipitated silica according to claim 5 as a flatting agent in paints.

8. The use of the precipitated silica according to claim 6 as a flatting agent in paints.

**Revendications**

1. Procédé pour l'obtention d'un acide silicique de précipitation finement divisé à haute structure ayant :

- une surface BET (DIN 66132) de 150 à 350 m$^2$/g,
- une densité tassée (DIN 53194) entre 60 et 120 g/l,
- un indice DBP entre 3,0 et 4,0 ml/g,
- une répartition de la taille des grains d'au moins de 70 % de 1 à 6 $\mu$m,

dans lequel
on chauffe un mélange formé d'eau et de silicate de sodium sous agitation jusqu'à une température de 70 à 80°C, que l'on ajoute par dosage, à cette préparation, de l'acide sulfurique concentré jusqu'à ce que la moitié de l'alcali présent soit neutralisé, que l'on traite le mélange réactionnel à l'aide d'un appareil de coupe et que l'on augmente le cas échéant simultanément la température à $86 \pm 5$°C, que l'on ajoute après un intervalle de temps de 30 à 120 mn, de l'acide sulfurique concentré avec une vitesse plus élevée tout en coupant jusqu'à ce que la valeur du pH de la suspension d'acide silicique formée, soit de 3,0 à 3,5, que l'on dilue le cas échéant la suspension d'acide silicique avec de l'eau, que l'on sépare le cas échéant la fraction grossière à l'aide d'une pompe centrifuge et d'un hydrocyclone, que l'on sépare par filtration l'acide silicique à l'aide de dispositifs connus de filtration, que l'on lave le gâteau de filtre d'acide silicique jusqu'à être dépourvu de sulfates, que l'on disperse à nouveau le gâteau de filtre d'acide silicique par addition d'eau à l'aide d'une unité d'agitation pour former une suspension ayant une teneur en solides de $80 \pm 10$ g/l, que l'on ajoute le cas échéant à cette suspension du chlorure d'alcoyldiméthylbenzylammonium, que l'on sèche par pulvérisation la suspension ainsi obtenue et que l'on broie le produit séché.

2. Acide silicique de précipitation finement divisé à haute structure avec :

   - une surface BET (DIN 66132) entre 150 et 350 $m^2$/g,
   - une densité tassée (DIN 53194) entre 60 et 120 g/l,
   - un indice DBP entre 3,0 et 4,0 ml/g,
   - une répartition de la taille des grains d'au moins 70 % de 1 à 6 $\mu$m,

   préparé selon la revendication 1.

3. Utilisation de l'acide silicique de précipitation finement dispersé selon la revendication 1 comme agent de matité dans des laques.

4. Acide silicique de précipitation selon la revendication 1,
   caractérisé en ce que
   celui-ci a été recouvert au moyen d'une émulsion et qu'il possède une teneur en carbone allant de 1 à 8 % en poids.

5. Acide silicique de précipitation selon la revendication 4,
   caractérisé en ce qu'
   il a été enduit à l'aide d'une émulsion d'huile de silicone.

6. Acide silicique de précipitation selon la revendication 4,
   caractérisé en ce que
   celui-ci a été enduit à l'aide d'une émulsion de cire de polyéthylène.

7. Utilisation de l'acide silicique de précipitation selon la revendication 5 comme agent de matité dans des laques.

8. Utilisation de l'acide silicique de précipitation selon la revendication 6 comme agent de matité dans des laques.